# NEUE EUROPÄISCHE PATENTSCHRIFT

(11) **EP 2 723 470 B2**
(45) Veröffentlichungstag und Bekanntmachung des Hinweises auf die Entscheidung über den Einspruch: **09.10.2019**
(45) Hinweis auf die Patenterteilung: 11.03.2015
(21) Anmeldenummer: 12728272.1
(22) Anmeldetag: 18.06.2012
(51) Int. Cl.: B01D 46/10

(54) **PLATTENFILTERELEMENT**
PLATE FILTER ELEMENT
ÉLÉMENT FILTRANT EN PLAQUE

(30) Priorität: 24.06.2011 DE 102011078057
(43) Veröffentlichungstag der Anmeldung: 30.04.2014
(73) Patentinhaber: Mahle International GmbH, 70376 Stuttgart (DE)
(72) Erfinder: KAISER, Sven Alexander, 71364 Winnenden (DE)
(74) Vertreter: BRP Renaud & Partner mbB Rechtsanwälte Patentanwälte Steuerberater
(86) Internationale Anmeldenummer: PCT/EP2012/061556
(87) Internationale Veröffentlichungsnummer: WO 2012/175438

(56) Entgegenhaltungen:
- DE-A1- 19 746 804
- US-A- 5 843 198
- US-A1- 2004 194 441
- "Technischer Produktprospekt der Firma Parker Hannifin Corporation", Over-molded Filters Maximize filter capability, 5 August 2008 (2008-08-05), XP055259845, Retrieved from the Internet: URL:https://www.parker.com/portal/site/PAR KER/menuitem.6c94058cc6466c63 15731910237ad1ca/?vgnextoid=f497cab60275e2 10VgnVCM10000048021d acRCRD&vgnextfmt=EN [retrieved on 2015-12-10]

## Beschreibung

Die vorliegende Erfindung betrifft ein Plattenfilterelement für eine Filtereinrichtung, insbesondere für eine Luftfiltereinrichtung, vorzugsweise eines Kraftfahrzeugs. Die Erfindung betrifft außerdem ein Filtergehäuse für eine Filtereinrichtung, insbesondere für eine Luftfiltereinrichtung, vorzugsweise eines Kraftfahrzeugs. Schließlich betrifft die vorliegende Erfindung eine Filtereinrichtung, insbesondere eine Luftfiltereinrichtung, vorzugsweise eines Kraftfahrzeugs, die mit einem derartigen Filtergehäuse sowie mit einem derartigen Plattenfilterelement ausgestattet ist.

Ein Plattenfilterelement umfasst üblicherweise einen ebenen, flachen Filterkörper, der in der Regel aus einem bahnenförmigen, gefalteten Filtermaterial hergestellt ist. Hierdurch besitzt der Filterkörper üblicherweise einen den durchströmbaren Querschnitt des Filterkörpers einfassenden, umlaufenden, seitlichen Rand, der zumindest zwei geradlinige Randabschnitte aufweist, die unter Ausbildung einer Ecke aneinander grenzen. Üblicherweise besitzt der Filterkörper einen rechteckigen durchströmbaren Querschnitt, so dass vier geradlinige Randabschnitte in vier Ecken rechtwinklig aneinander grenzen. Bei bestimmten Anwendungen sind jedoch auch mehreckige und teilweise abgerundete Randverläufe sowie spitze und stumpfe Winkel in den Ecken denkbar. Die vorliegende Erfindung beschäftigt sich mit Filterkörpern, die zumindest eine Ecke aufweisen.

Um den Filterkörper dicht in einem Filtergehäuse anordnen zu können, ist am Filterkörper üblicherweise eine Dichtung angebracht, die entlang des Rands des Filterkörpers umlaufend angeordnet ist. Diese Dichtung kann angespritzt oder angeschäumt oder angeklebt oder angeschweißt sein. Ebenso kann der Filterkörper in die Dichtung einplastifiziert sein.

Es hat sich gezeigt, dass in den Eckbereichen die Abdichtung zwischen Filterkörper und Filtergehäuse problematisch ist. Zur Vermeidung von Leckagen ist eine möglichst gleichmäßige Kontaktierung zwischen der Dichtung und einer entsprechenden Gegenkontur des Filtergehäuses mit möglichst homogener Kraftverteilung erwünscht. In den Ecken lässt sich dies jedoch nur schwer darstellen. Folgt die Dichtung der Kontur des Rands, besitzt sie außen einen vergleichsweise engen Radius, der eine homogene Dichtungswirkung stark beeinträchtigt. Folgt die Dichtung dagegen einem vergleichsweise weiten Radius, der eine homogene Dichtungsleistung begünstigt, erschwert sich die dichte Anbindung am Filterkörper. Versucht man dagegen, die Dichtung im Eckbereich so zu verlegen, dass sie außen einen weiten Radius besitzt und innen dicht dem Rand des Filterkörpers folgt, muss im Eckbereich die Ecke durch eine entsprechend kreisbogenförmig gekrümmte Kontur ersetzt werden. Dies ist jedoch mit einem vergleichsweise großen Aufwand für die Herstellung der Filterkörper verbunden, da sich durch das Falten des Bahnenmaterials automatisch rechteckige Außenkonturen ergeben. Um eine Ecke durch eine Abrundung zu ersetzen, ist daher eine aufwendige Nachbearbeitung des gefalteten Filterkörpers erforderlich.

Die vorliegende Erfindung beschäftigt sich mit dem Problem, für ein Plattenfilterelement bzw. für ein Filtergehäuse bzw. für eine Filtereinrichtung eine verbesserte Ausführungsform anzugeben, die sich insbesondere dadurch auszeichnet, dass bei preiswerter Herstellbarkeit die Gefahr einer Leckage im Eckbereich des Plattenfilterelements reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Dichtung mit einer innen umlaufenden, also an einer dem Filterkörper zugewandten Innenseite der Dichtung umlaufenden Innenkontur und einer außen umlaufenden, also an einer vom Filterkörper abgewandten Außenseite der Dichtung umlaufenden Außenkontur auszustatten. Die Innenkontur verläuft dabei bis in die jeweilige Ecke hinein parallel zu den geradlinigen Randabschnitten und bildet somit weitgehend die Ecke ab. Dabei kann jedoch eine Innenkrümmung, insbesondere mit einem Innenradius, vorgesehen sein, die jedoch vergleichsweise klein ausfällt. Im Unterschied dazu verläuft die Außenkontur der Dichtung zunächst parallel zu den geradlinigen Randabschnitten, jedoch nur bis an einen die jeweilige Ecke und Endabschnitte der an die jeweiligen Ecke angrenzenden geradlinigen Randabschnitte enthaltenden Eckbereich. Im Eckbereich selbst verläuft die Außenkontur so, dass sie eine gegenüber den geradlinig verlaufenden Abschnitten der Außenkontur eine nach außen gewölbte Ausbuchtung bildet. Diese Ausbuchtung fällt um ein Vielfaches größer aus als die zuvor genannte Innenkrümmung der Innenkontur in der Ecke, so dass sich die Außenkontur in besonderer Weise dafür eignet, Andrückkräfte gegenüber einer komplementären Gegenkontur des Filtergehäuses und somit die Dichtungswirkung zu homogenisieren. Durch die vorgeschlagene Ausgestaltung der Dichtung kann die Herstellung des Filterkörpers mit dem eckigen Randbereich beibehalten und dementsprechend preiswert realisiert werden. Da die Dichtung mit ihrer Innenkontur dem eckigen Rand folgt, lässt sich die Abdichtung gegenüber dem Filterkörper hinreichend zuverlässig darstellen. Durch die Ausbuchtung der Außenkontur im jeweiligen Eckbereich lässt sich auch im jeweiligen Eckbereich die gewünschte Dichtungswirkung einfach realisieren. Das Ausformen der Ausbuchtung an der Dichtung ist herstellungstechnisch vergleichsweise einfach realisierbar. Beispielsweise kann die Dichtung an den Filterkörper angespritzt oder angeschäumt werden. Es ist also lediglich ein Werkzeug erforderlich, in das der Filterkörper einsetzbar ist und das eine Negativform der Dichtung enthält.

Entsprechend einer vorteilhaften Ausführungsform kann die Außenkontur im jeweiligen Eckbereich einen gekrümmten Verlauf aufweisen, der entlang der jeweiligen Ausbuchtung zumindest zwei oder genau zwei Wendepunkte besitzt. Hierdurch ergibt sich für die Außenkontur eine besonders einfache Geometrie, die leicht reproduzierbar ist. Dies ist insbesondere im Hinblick auf die dazu komplementäre Gegenkontur am Filtergehäuse von Vorteil, da so geringe Formtoleranzen eingehalten werden können.

Gemäß einer vorteilhaften Weiterbildung kann der gekrümmte Verlauf zwischen den beiden Wendepunkten einen Kreisbogenabschnitt aufweisen. Auch dies vereinfacht die Geometrie und somit die Reproduzierbarkeit und ermöglicht die Einhaltung vergleichsweise enger Formtoleranzen.

Gemäß einer anderen Weiterbildung kann der gekrümmte Verlauf an den Enden des Eckbereichs tangential in die geradlinig verlaufenden Abschnitte der Außenkontur übergehen. Hierdurch lassen sich innerhalb der Außenkontur Störkonturen oder Unstetigkeiten, wie Ecken, Kanten, Winkel und dergleichen, vermeiden, was die Gefahr von Leckagen reduziert.

Bei einer anderen Ausführungsform kann die Dichtung, z. B. im Bereich der Innenkontur, einen Verbindungsbereich aufweisen, der entlang des Rands unterbrechungsfrei umlaufend mit dem Filterkörper dicht verbunden ist. Somit erfolgt, z. B. im Bereich der Innenkontur, die dichte Verbindung zwischen der Dichtung und dem Filterkörper.

Erfindungsgemäß weist die Dichtung im Bereich der Außenkontur außen eine umlaufende Dichtlippe auf. Die Dichtlippe definiert eine Kontaktzone zur jeweiligen Gegenkontur des Filtergehäuses, was die Dichtungswirkung verbessert.

Gemäß einer anderen vorteilhaften Ausführungsform kann die Dichtung zwischen der Innenkontur und der Außenkontur eine umlaufende Nut aufweisen. Durch diese Nut wird eine Federelasitizität im Profilquerschnitt zwischen Innenkontur und Außenkontur hergestellt, die es ermöglicht, Kräfte, welche an einer Innenseite der Innenkontur nach außen orientiert sind und an der Außenseite der Außenkontur nach innen orientiert sind, federelastisch aufzunehmen, um entgegengesetzt orientierte Vorspannkräfte zu erzeugen, welche die Dichtungswirkung unterstützen. Mit anderen Worten, für die Montage lässt sich die Dichtung quer zu ihrer Längsrichtung, die sich in der Umfangsrichtung des Rands erstreckt, komprimieren, so dass die Innenkontur nach innen vorgespannt an einer komplementären Gegenkontur anliegen kann und die Außenkontur nach außen vorgespannt an einer komplementären Gegenkontur anliegen kann.

Bei einer speziellen Weiterbildung können entlang der Nut einzelne Stege vorgesehen sein, die sich quer zur Längsrichtung der Nut erstrecken und Seitenwände der Nut aneinander abstützen. Hierdurch kann durch Dimensionierung, Anzahl und Positionierung der Stege die Federelastizität der Dichtung quer zu ihrer Längsrichtung gezielt modelliert werden, bspw. um im Eckbereich die Vorspannung zu vergrößern.

Gemäß einer alternativen Ausführungsform kann die Dichtung an einer Seite zwischen der Innenkontur und der Außenkontur zumindest eine einseitig offene Vertiefung aufweisen. Sofern die Dichtung keine Nut der vorstehenden Art aufweist, lässt sich mit derartigen Vertiefungen, z. Bsp. im Eckbereich, die Elastizität der Dichtung modellieren.

Bei einer anderen vorteilhaften Ausführungsform kann die Dichtung an den Filterkörper angeschäumt sein, wobei die Dichtung insbesondere aus Polyurethan hergestellt sein kann. Das Anschäumen der Dichtung lässt sich besonders einfach realisieren. Die Verwendung von Polyurethan als Dichtungsmaterial hat sich dabei als besonders vorteilhaft herausgestellt.

Ein erfindungsgemäßes Filtergehäuse umfasst zwei Gehäuseschalen, die in einem Flanschbereich aneinander befestigbar sind und dabei einen Innenraum zur Aufnahme eines Filterelements der vorbeschriebenen Art umschließen. Die erste Gehäuseschale kann im Flanschbereich eine Innenrippe aufweisen, die sich geschlossen umlaufend komplementär zur Innenkontur der Dichtung des Filterelements erstreckt. Desweiteren kann die erste Gehäuseschale im Flanschbereich eine Außenrippe aufweisen, die sich geschlossen umlaufend komplementär zur Außenkontur der Dichtung des Filterelements erstreckt. Mit anderen Worten, die Innenrippe folgt dem weitgehend geradlinigen Verlauf der Innenkontur der Dichtung, während die Außenrippe dem im Bereich der jeweiligen Ausbuchtung gekrümmten Verlauf der Außenkontur der Dichtung folgt. Im montierten Zustand, also bei in das Filtergehäuse eingesetztem Filterelement kommt die Innenkontur der Dichtung geschlossen umlaufend an der Innenrippe des Filtergehäuses zur Anlage, während die Außenkontur der Dichtung geschlossen umlaufend an der Außenrippe des Filtergehäuses zur Anlage kommt. Hierdurch wird eine effektive Abdichtung realisiert.

Entsprechend einer vorteilhaften Ausführungsform kann die erste Gehäuseschale im Flanschbereich eine Zusatzrippe aufweisen, die sich außerhalb der Außenrippe bis in den jeweiligen Eckbereich hinein parallel zu den geradlinigen Randabschnitten erstreckt. Die Zusatzrippe verläuft dabei quer zur Längsrichtung der Dichtung beabstandet zur Außenrippe. Hierdurch kann am Filtergehäuse der Eindruck erweckt werden, dass die Dichtung des Filterelements eine herkömmliche Kontur aufweist, die sich geradlinig bis in die Ecken erstreckt. Gemäß einer besonders vorteilhaften Weiterbildung kann nun die Zusatzrippe einen gekrümmten Abschnitt aufweisen, der die beiden geradlinig verlaufenden Abschnitte miteinander verbindet. Hierdurch wird am Filtergehäuse der Eindruck erweckt, dass im Eckbereich des Filterkörpers die geradlinigen Randabschnitte gekrümmt ineinander übergehen. Besonders zweckmäßig ist es dabei, dass der gekrümmte Abschnitt der Zusatzrippe gegenüber den geradlinig verlaufenden Abschnitten der Zusatzrippe nicht nach außen gewölbt ist. Der Verlauf des gekrümmten Abschnitts der Zusatzrippe besitzt somit keinen Wendepunkt. Insbesondere kann der gekrümmte Abschnitt der Zusatzrippe kreisbogenförmig gekrümmt sein.

Besonders vorteilhaft ist dabei eine Ausführungsform, bei welcher die Zusatzrippe im Eckbereich formintegriert in die Außenrippe übergeht. Das bedeutet, dass am Filtergehäuse außen eine unterbrechungsfrei umlaufende Kontur erkennbar ist, die im Bereich der geradlinigen Abschnitte durch die Zusatzrippe gebildet ist und im Eckbereich durch die Außenrippe gebildet ist. Hierdurch baut das Filtergehäuse kompakter. Ferner lässt sich Material einsparen.

Gemäß einer anderen Ausführungsform kann die zweite Gehäuseschale im Flanschbereich eine umlaufende Schulter zum Auflegen der Dichtung aufweisen. Hierdurch vereinfacht sich zum einen das Einsetzen des Filterelements in das Gehäuse. Zum anderen bildet die umlaufende Schulter ein Widerlager, gegen das die Dichtung angepresst werden kann, um die Außendichtung und die Innendichtung in den zwischen der Außenrippe und der Innenrippe ausgebildeten Aufnahmeraum eindrücken zu können. In der Eindrückrichtung, in welcher die Dichtung in besagten Aufnahmeraum eingebracht wird, kann sich der Aufnahmeraum im Querschnitt verjüngen und/oder kann sich die Dichtung im Querschnitt verjüngen. Mit anderen Worten, Innenrippe und Außenrippe können im Querschnitt des Flanschbereichs geneigt zueinander orientiert sein und/oder Innenkontur und Außenkontur können im Querschnitt der Dichtung geneigt zueinander orientiert sein.

Bei einer anderen Ausführungsform kann die zweite Gehäuseschale im Flanschbereich an einer der ersten Gehäuseschale zugewandten Seite einen Kragen aufweisen, der außerhalb der Außenrippe verläuft und im jeweiligen Eckbereich unterbrochen ist oder sein kann. Mit Hilfe eines derartigen Kragens lässt sich die Positionierung der beiden Gehäuseschalen aneinander für die Montage vereinfachen. Zweckmäßig ist der Kragen an der zweiten Gehäuseschale so positioniert, dass er in einen Abstandsraum zwischen der Außenrippe und der ggf. vorhandenen Zusatzrippe hineinragen kann. Durch die ggf. vorhandenen Unterbrechungen des Kragens im Eckbereich lässt sich das Filtergehäuse kompakter realisieren. Bei einer weiteren Ausführungsform kann die zweite Gehäuseschale im Flanschbereich an einer von der ersten Gehäuseschale abgewandten Seite einen umlaufenden Versteifungskragen aufweisen, der zu einer intensiven Aussteifung der zweiten Gehäuseschale im Flanschbereich führt.

Eine erfindungsgemäße Filtereinrichtung, bei der es sich bevorzugt um eine Luftfiltereinrichtung handelt, die insbesondere bei einem Kraftfahrzeug verwendet werden kann, ist ein Filtergehäuse der vorbeschriebenen Art vorgesehen, in welches ein Filterelement der vorbeschriebenen Art eingesetzt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

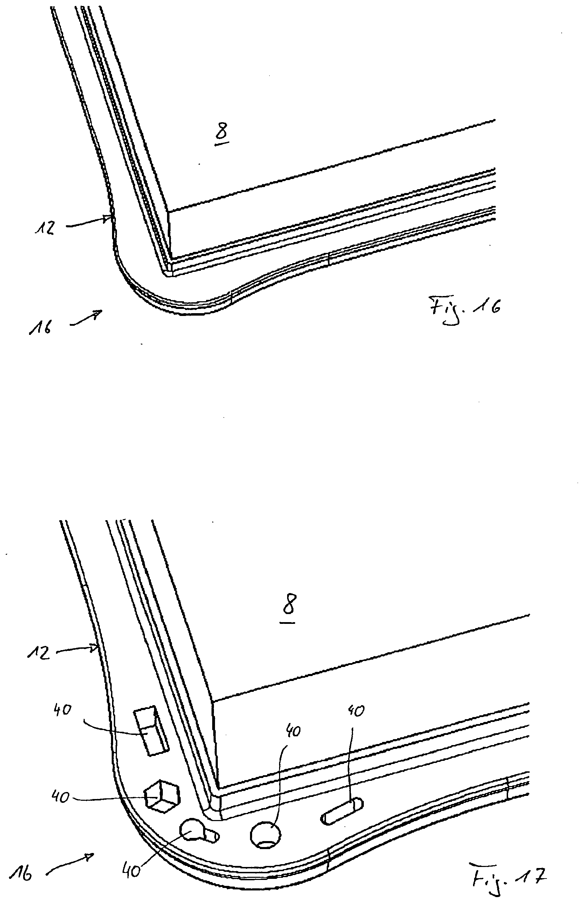

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Die Figuren 16 und 17 zeigen dagegen keine erfindungsgemäßen Ausführungsformen.

Es zeigen, jeweils schematisch,
- Fig. 1: eine isometrische Ansicht auf eine Filtereinrichtung in auseinander gezogener Darstellung,
- Fig. 2: eine Draufsicht auf ein Plattenfilterelement der Filtereinrichtung,
- Fig. 3: eine Draufsicht auf eine erste Gehäuseschale eines Gehäuses der Filtereinrichtung,
- Fig. 4: eine Draufsicht auf eine zweite Gehäuseschale des Filtergehäuses,
- Fig. 5: eine isometrische Ansicht auf einen Eckbereich des Filterelements,
- Fig. 6: eine Draufsicht auf den Eckbereich,
- Fig. 7: eine Schnittansicht gemäß Schnittlinien A-A aus Fig. 6,
- Fig. 8: eine Schnittansicht gemäß Schnittlinien B-B in Fig. 6,
- Fig. 9: eine Schnittansicht gemäß Schnittlinien C-C in Fig. 6,
- Fig. 10: eine isometrische Ansicht der ersten Gehäuseschale in einem Eckbereich,
- Fig. 11: eine Draufsicht der ersten Gehäuseschale im Eckbereich,
- Fig. 12: eine Schnittansicht der Filtereinrichtung im montierten Zustand in einem Flanschbereich entsprechend dem Schnitt A-A gemäß Fig. 7,
- Fig. 13: eine Schnittansicht wie in Fig. 12 entsprechend dem Schnitt B-B gemäß Fig. 8,
- Fig. 14: eine Schnittansicht wie in Fig. 12 entsprechend dem Schnitt C-C gemäß Fig. 9,
- Fig. 15: eine isometrische Ansicht wie in Fig. 5, jedoch einer anderen Ausführungsform,
- Fig. 16: eine Ansicht wie in Fig. 15, jedoch bei einer weiteren Ausführungsform,
- Fig. 17: eine Ansicht wie in Fig. 15, jedoch bei einer zusätzlichen Ausführungsform,
- Fig. 18: eine isometrische Ansicht eines Filterelements bei einer anderen Ausführungsform,
- Fig. 19: eine Draufsicht des Filterelements aus Fig. 18,
- Fig. 20: eine Schnittansicht des Filterelements gemäß Schnittlinien D-D in Fig. 19,
- Fig. 21: eine Schnittansicht der Filtereinrichtung entsprechend dem Schnitt D-D gemäß Fig. 20.

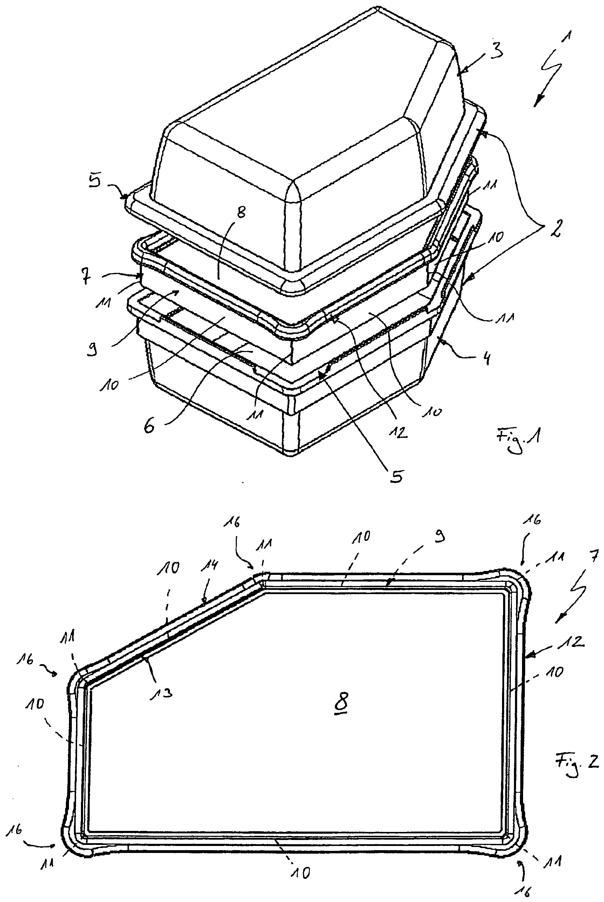

Entsprechend Fig. 1 umfasst eine Filtereinrichtung 1 ein Filtergehäuse 2, das zwei Gehäuseschalen, nämlich eine erste Gehäuseschale 3 und eine zweite Gehäuseschale 4 aufweist. Die beiden Gehäuseschalen 3, 4 sind in einem Flanschbereich 5 aneinander befestigbar und umschließen dabei einen Innenraum 6. Die Filtereinrichtung 1 umfasst außerdem ein Plattenfilterelement 7, das im Folgenden auch als Filterelement 7 bezeichnet werden kann und das im Innenraum 6 des Gehäuses 2 aufgenommen ist. Die Filtereinrichtung 1 ist vorzugsweise eine Luftfiltereinrichtung, und zwar insbesondere eines Kraftfahrzeugs. Die Filtereinrichtung 1 kann bspw. zum Filtern von Frischluft dienen, die einer Brennkraftmaschine des Fahrzeugs oder einem Fahrgastraum des Fahrzeugs zugeführt wird.

Gemäß Fig. 2 weist das Filterelement 7 einen ebenen, flachen, plattenförmigen Filterkörper 8 auf, der einen Rand 9 besitzt, der umlaufend und seitlich sowie einen durchströmbaren Querschnitt des Filterkörpers 8 einfassend angeordnet ist. Dieser Rand 9 besitzt zumindest zwei geradlinige Abschnitte 10, die unter Ausbildung einer Ecke 11 aneinander grenzen. Im Beispiel besitzt der Rand 9 fünf geradlinige Randabschnitte 10, wobei je zwei aneinander grenzende geradlinige Randabschnitte 10 eine solche Ecke 11 ausbilden, so dass insgesamt auch fünf derartige Ecken 11 vorgesehen sind. Die Anzahl der geradlinigen Randabschnitte 10 sowie die Anzahl der Ecken 11 ist hier rein exemplarisch, so dass auch mehr oder weniger Ecken 11 bzw. mehr oder weniger geradlinige Randabschnitte 10 vorhanden sein können.

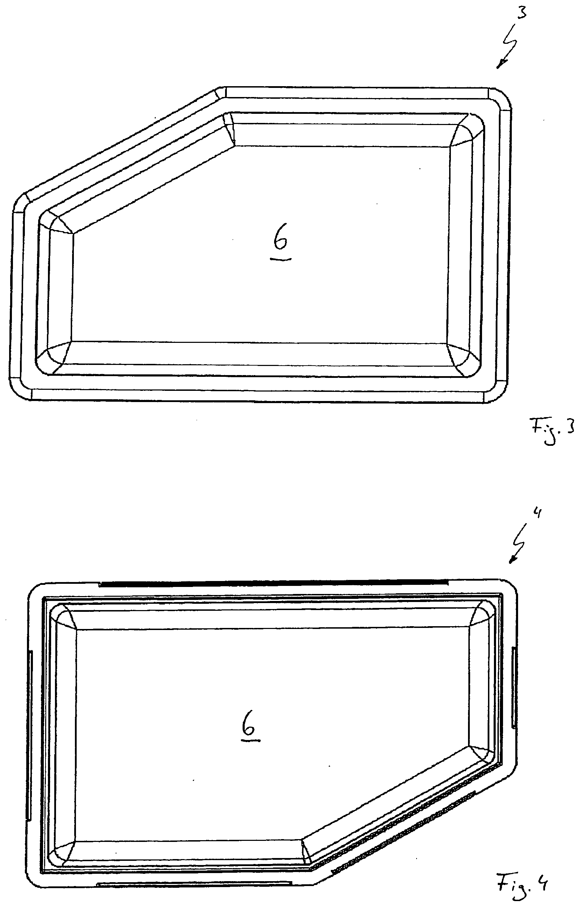

Das Filterelement 7 weist außerdem eine Dichtung 12 auf, die am Filterkörper 8 angebracht ist, derart, dass sie entlang des Rands 9 umläuft. Innerhalb der Filtereinrichtung 1 bzw. im Gehäuse 2 befindet sich die Dichtung 12 im Flanschbereich 5. Dementsprechend besitzen die beiden Gehäuseschalen 3, 4 gemäß den Draufsichten der Fig. 3 und 4 Querschnitte, die nahezu deckungsgleich zum Querschnitt des Filterelements 7 aus Fig. 2 sind.

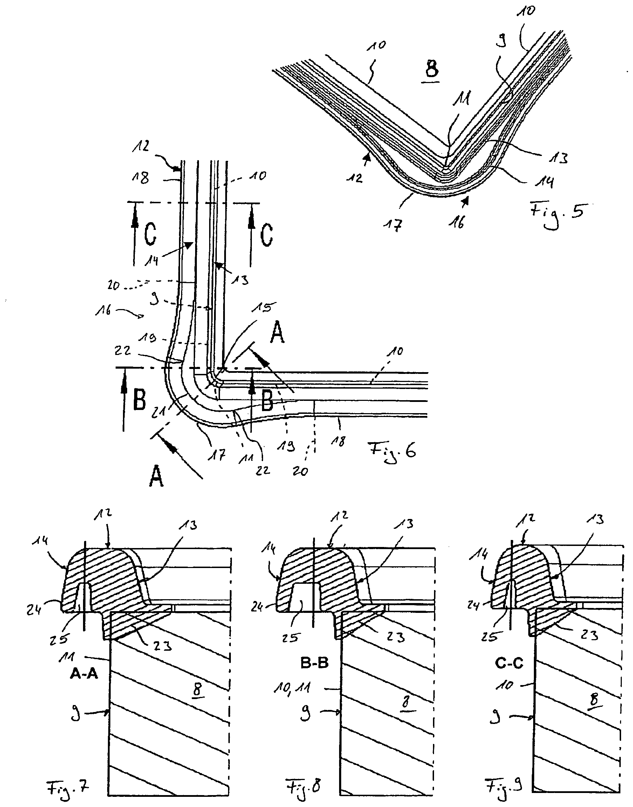

Das Filterelement 7 bzw. dessen Dichtung 12 wird im Folgenden anhand der Fig. 5 bis 9 näher erläutert.

Die Dichtung 12 weist eine Innenkontur 13 und eine Außenkontur 14 auf. Die Innenkontur 13 befindet sich dabei an einer dem Filterkörper 8 zugewandten Innenseite der Dichtung 12 und ist somit innen umlaufend ausgebildet. Die Außenkontur 14 befindet sich an einer vom Filterkörper 8 abgewandten Außenseite der Dichtung 12 und verläuft somit außen umlaufend.

Die Innenkontur 13 verläuft parallel zu den geradlinigen Randabschnitten 10 des Rands 9 bis in die jeweilige Ecke 11 hinein. Lediglich unmittelbar in der jeweiligen Ecke 11 kann die Innenkontur 13 einen abgerundeten Übergang 15 aufweisen, der insbesondere kreisbogenförmig ausgestaltet ist und dabei einen vergleichsweise kleinen Innenradius besitzt. Im Unterschied dazu verläuft die Außenkontur 14 nur außerhalb eines Eckbereichs 16 in Abschnitten 18 parallel zu den geradlinigen Randabschnitten 10 des Rands 9, während die Außenkontur 14 in diesem Eckbereich 16 eine nach außen gewölbte Ausbuchtung 17 bildet. Die Ausbuchtung 17 ist dabei bezüglich der geradlinig verlaufenden Abschnitte 18 der Außenkontur 14 nach außen gewölbt. Der Eckbereich 16 enthält die jeweilige Ecke 11 des Rands 9 und enthält außerdem Endabschnitte 19 der an besagte Ecke 11 angrenzenden geradlinigen Randabschnitte 10 des Rands 9. In den Fig. 2 und 6 sind zur Verdeutlichung des Eckbereichs 16 Grenzlinien 20 angedeutet, welche den Übergang bzw. die Grenze zwischen den geradlinigen Abschnitten 18 der Außenkontur 14 und der Ausbuchtung 17 des Eckbereichs 16 kennzeichnen.

Die Außenkontur 14 besitzt im Eckbereich 16 zur Ausbildung der Ausbuchtung 17 einen gekrümmten Verlauf 21, der entlang der Ausbuchtung 17 zwei Wendepunkte 22 aufweist. Folgt man bspw. in Fig. 6 von rechts kommend dem Verlauf 21 besitzt der Verlauf 21 ab der ersten Grenzlinie 20 eine Linkskrümmung oder Linkskurve, die im ersten Wendepunkt 22 in eine Rechtskurve oder Rechtskrümmung übergeht. Diese Rechtskurve oder Rechtskrümmung geht am zweiten Wendepunkt 22 wieder in eine Linkskurve oder Linkskrümmung über, die an der zweiten Bereichsgrenze 20 in den geradlinigen Abschnitt 18 übergeht. Zwischen den beiden Wendepunkten 22 besitzt der Verlauf 21 im gezeigten Beispiel einen Kreisbogenabschnitt, dessen Radius deutlich größer ist als der zuvor genannte Radius am Übergang 15 in der Ecke 11 der Innenkontur 13. Der gekrümmte Verlauf 21 geht an den Enden oder Grenzen 20 des Eckbereichs 16 zweckmäßig tangential in die geradlinigen Abschnitte 18 der Außenkontur 14 über.

Gemäß den Fig. 7 bis 9 besitzt die Dichtung 12 an einer dem Filterkörper 8 zugewandten Seite einen Verbindungsbereich 23, der entlang des Rands 9 umlaufend, lückenlos mit dem Filterkörper 8 dicht verbunden ist. Erkennbar ist der Filterkörper 8 in diesen Verbindungsbereich 23 eingebettet. Dies kann bspw. beim Anspritzen oder Anschäumen der Dichtung 12 realisiert werden.

Die Dichtung 12 weist ferner im Bereich der Außenkontur 14 eine umlaufende Dichtlippe 24 auf, wodurch eine definierte Dichtkontur geschaffen wird.

Bei der in den Fig. 7 bis 9 und 12 bis 15 gezeigten Ausführungsform weist die Dichtung 12 zwischen der Innenkontur 13 und der Außenkontur 14 eine umlaufende Nut 25 auf, die bis etwa 50% in die Dichtung 12 eintaucht. Bei anderen Ausgestaltungen kann die Nut 25 auch weiter als 50%, insbesondere bis ca. 70% eintauchen. Dadurch wird eine weichere Dichtung 12 gebildet. Bei anderen Ausgestaltungen taucht die Nut 25 weniger als 50% ein. Dadurch wird eine härtere Dichtung 12 gebildet. Insbesondere kann die Eintauchtiefe und/oder Breite der Nut 25 variieren. So kann an jeder Stelle des Filterelements 7 eine exakt definierte Dichtkraft der Dichtung 12 am Filtergehäuse 2 erzeugt werden, die insbesondere in der_Umlaufrichtung variieren kann. Die Nut 25 erhöht die Elastizität der Dichtung 12 insbesondere im Bereich der Dichtlippe 24. Insbesondere kann die Nut 25 innerhalb des Eckbereichs 16 eine variierende Nutbreite aufweisen, wobei insbesondere der Nutverlauf so konzipiert werden kann, dass eine Wandstärke der Dichtung 14 im Bereich der Dichtlippe 24 weitgehend konstant bleibt, während ein Abstand einer von der Dichtlippe 24 abgewandten Innenwand der Nut vom Rand 9 ebenfalls weitgehend konstant bleibt. Durch die Geometrie der Nut kann die Elastizität der Dichtung 12 modelliert werden.

Wie erwähnt ist die Dichtung 12 zweckmäßig an den Filterkörper 8 angeschäumt. Insbesondere ist die Dichtung 12 aus Polyurethan hergestellt.

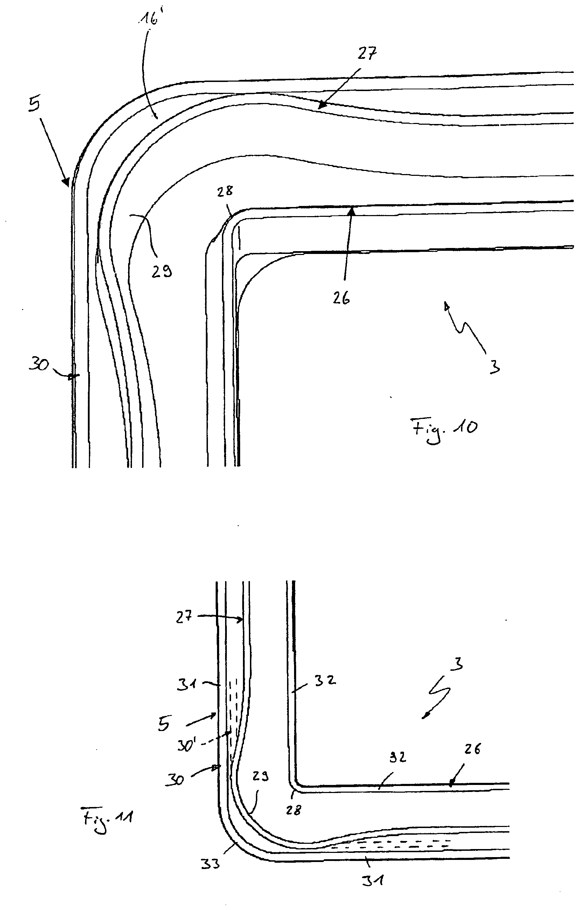

Gemäß den Fig. 10 bis 14 weist die erste Gehäuseschale 3 im Flanschbereich 5 eine Innenrippe 26 und eine Außenrippe 27 auf. Die Innenrippe 26 erstreckt sich dabei umlaufend und komplementär zur Innenkontur 13 der Dichtung 12. Somit erstreckt sich die Innenrippe 26 parallel zu den geradlinigen Randabschnitten 10 bis in die Ecke 11 hinein, wobei ein abgerundeter Übergang 28 analog zum Übergang 15 der Innenkontur 13 vorgesehen sein kann. Die Außenrippe 27 erstreckt sich dabei umlaufend und komplementär zur Außenkontur 14 der Dichtung 12. Somit wird mit der Außenrippe 27 die Ausbuchtung 17 der Außenkontur 14 nachgeformt. Dementsprechend enthält die Außenrippe 27 im Eckbereich 16' des Gehäuses 2 eine Einbuchtung 29, die komplementär zur Ausbuchtung 17 der Dichtung 12 verläuft.

Desweiteren kann die erste Gehäuseschale 3 im Flanschbereich 5 eine Zusatzrippe 30 aufweisen, die zusätzlich zur Innenrippe 26 und zusätzlich zur Außenrippe 27 vorgesehen ist und die bis in den jeweiligen Eckbereich 16' hinein außerhalb der Außenrippe 27 parallel zu den geradlinigen Randabschnitten 10 verläuft. Somit weist die Zusatzrippe 30 geradlinige Abschnitte 31 auf, die parallel zu geradlinigen Abschnitten 32 der Innenrippe 26 verlaufen. Innerhalb des Eckbereichs 16' umfasst die Zusatzrippe 30 einen gekrümmten Abschnitt 33, der die beiden geradlinig verlaufenden Abschnitte 31 miteinander verbindet. Im Unterschied zur Außenrippe 27 ist dieser gekrümmte Abschnitt 33 bei der Zusatzrippe 30 nicht gegenüber den geradlinig verlaufenden Abschnitten 31 nach außen gewölbt, sondern ist vielmehr als einfach konturierter gekrümmter Übergang gestaltet, wie der Übergangsbereich 28 der Innenrippe 26. Nur der Radius des Übergangs 33 ist dabei größer gewählt als der Übergang 28. Mit unterbrochener Linie ist in Fig. 11 außerdem ein alternativer Verlauf für die Zusatzrippe eingetragen, für den die Zusatzrippe mit 30' bezeichnet ist. In diesem alternativen Verlauf der Zusatzrippe 30' geht die Zusatzrippe 30' im Eckbereich 16' formintegriert in die Außenrippe 27 über, wodurch Bauraum und Material einsparbar ist.

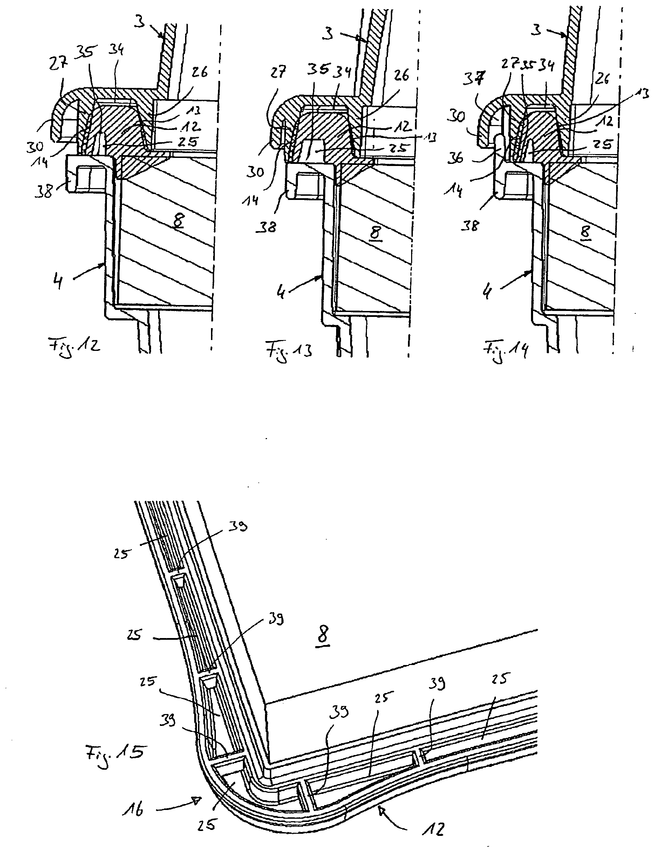

In den Fig. 12 bis 14 ist nun der montierte Zustand erkennbar, bei dem das Gehäuse 2 verschlossen ist und das Filterelement 7 im Gehäuse 2 angeordnet ist. Hierzu ist die Dichtung 12 in den Flanschbereich 5 eingebunden. Die Fixierung der beiden Gehäuseschalen 3, 4 aneinander führt somit auch zu einer Fixierung des Filterelements 7 an den beiden Gehäuseschalen 3, 4. Innenrippe 26 und Außenrippe 27 definieren einen Dichtungsaufnahmeraum 34, in den die Dichtung 12 eingesetzt ist. Bezüglich der Einsetzrichtung definieren Innenrippe 26 und Außenrippe 27 einen sich verjüngenden Querschnitt für den Dichtungsaufnahmeraum 34. Ferner sind Innenkontur 13 und Außenkontur 14 relativ zueinander geneigt, so dass auch die Dichtung 12 bezüglich der Einsetzrichtung einen sich verjüngenden Querschnitt besitzt. Hierdurch lassen sich vergleichsweise große Andrückkräfte realisieren, mit denen die Außenkontur 14 an der Außenrippe 27 und die Innenkontur 13 an der Innenrippe 26 zur Anlage kommen. Wie sich insbesondere den Fig. 4 und 12 bis 14 entnehmen lässt, besitzt die zweite Gehäuseschale 4 im Flanschbereich 5 eine umlaufende Schulter 35 auf welcher die Dichtung 12 im montierten Zustand aufliegt. Ferner ist an der zweiten Gehäuseschale 4 im Beispiel ein in den Fig. 4 und 14 erkennbarer Kragen 36 im Flanschbereich 5 ausgebildet, der außerhalb der Außenrippe 27 verläuft und - soweit eine Zusatzrippe 30 vorhanden ist - innerhalb der Zusatzrippe 30 verläuft. Gemäß Fig. 14 greift der Kragen 36 in einen Freiraum 37 ein, der durch den Abstand zwischen Außenrippe 27 und Zusatzrippe 30 entsteht. Wie sich den Fig. 1 und 4 entnehmen lässt, kann dieser Kragen 36 in den Eckbereichen 16 bzw. 16' unterbrochen sein.

Ferner besitzt die zweite Gehäuseschale 4 gemäß den Fig. 12 bis 14 im Flanschbereich 5 außen einen Versteifungskragen 38, der an einer der ersten Gehäuseschale 3 abgewandten Seite umlaufend angeordnet ist.

Die beiden Gehäuseschalen 3, 4 sind zweckmäßig Spritzformteile. Dabei können die Rippen 26, 27, 30 integral an der ersten Gehäuseschale 3 ausgeformt sein. Der Kragen 36 und der Versteifungskragen 38 können integral an der zweiten Gehäuseschale 4 ausgeformt sein.

Gemäß Fig. 15 kann bei einer speziellen Ausführungsform vorgesehen sein, die Elastizität der Dichtung 12 mit Hilfe von Stegen 39 zu modellieren, die in der Nut 25 angeordnet sind, sich dabei quer zur umlaufenden Längsrichtung der Nut 25 erstrecken und dabei nicht bezeichnete Seitenwände der Nut 25 aneinander abstützen.

Fig. 16 zeigt eine nicht erfindungsgemäße Ausführungsform der Dichtung 12, bei welcher die Dichtung 12 zwischen der Innenkontur 13 und der Außenkontur 14 einen Vollquerschnitt aufweist.

Fig. 17 zeigt ebenfalls eine nicht erfindungsgemäße Modifikation der Dichtung 12 aus Fig. 16, derart, dass die Dichtung 12 an einer der Schulter 35 zugewandten Seite zwischen Innenkontur 13 und Außenkontur 14 zumindest eine einseitig offene Vertiefung 40 enthält. In Fig. 17 sind rein exemplarisch mehrere derartige Vertiefungen 40 angedeutet, die sich hinsichtlich Positionierung und geometrischer Form voneinander unterscheiden. Durch das Anbringen derartiger Vertiefungen 40 kann die Elastizität der Dichtung 12 modelliert werden.

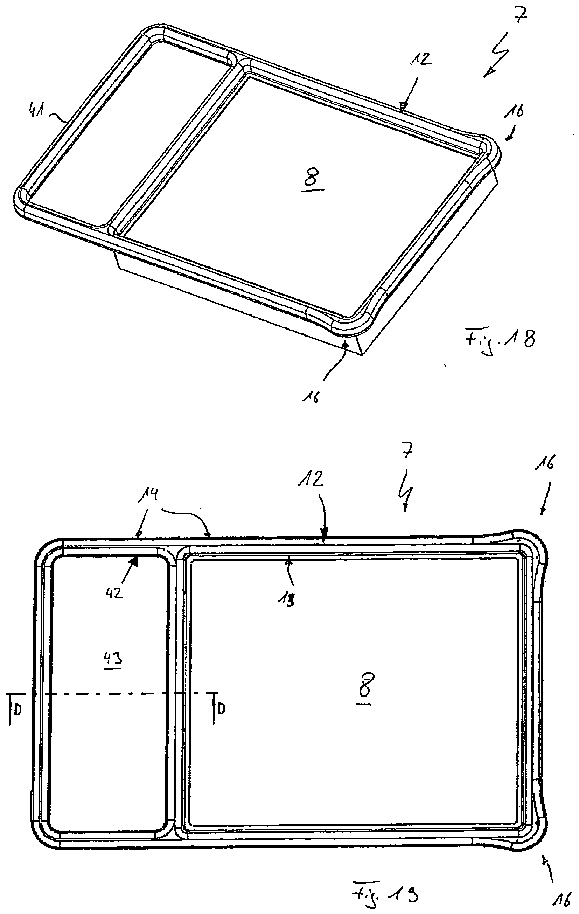

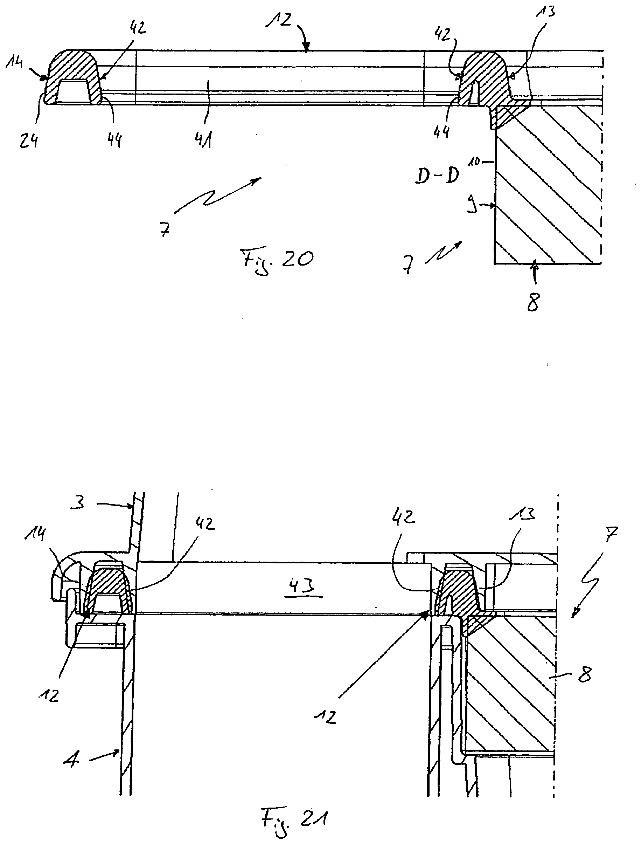

In den Fig. 18 bis 21 wird eine weitere spezielle Ausführungsform des Filterelements 7 vorgestellt, das dann zu entsprechenden analogen Modifikationen am Filtergehäuse 2 führt. Bei diesem modifiziertem Filterelement 7 ist der Filterkörper 8 rechteckig konfiguriert, wobei an einer Längsseite dieses Rechteckquerschnitts eine Erweiterung 41 der Dichtung 12 angeformt ist. Diese Erweiterung 41 hat dabei die Gestalt eines U-förmigen Bügels und umschließt dadurch eine Durchgangsöffnung 43. Die Durchgangsöffnung 43 kann bspw. eine Einlassöffnung oder Auslassöffnung des Gehäuses 2 umschließen. Bemerkenswert ist, dass die Dichtung 12 für diese Erweiterung 41 sowie für den dem Filterelement 8 zugeordneten Hauptbereich eine gemeinsame, vollständig geschlossen umlaufende Außenkontur 14 besitzt, während zwei separate Innenkonturen 13 und 42 vorgesehen sind. Die eine Innenkontur 13 verläuft entlang des Rands 9 des Filterkörpers 8. Die andere Innenkontur 42 umschließt die vorstehend genannte Durchgangsöffnung 43. Insbesondere kann die weitere Innenkontur 42 gemäß den Fig. 20 und 21 eine weitere Dichtlippe 44 ausbilden, die geschlossen umläuft und sich insbesondere parallel zur Dichtlippe 24 der Außenkontur 14 erstreckt.

## Patentansprüche

1. Plattenfilterelement für eine Filtereinrichtung (1), insbesondere für eine Luftfiltereinrichtung, vorzugsweise eines Kraftfahrzeugs,
- mit einem Filterkörper (8), der einen umlaufenden Rand (9) aufweist, der wenigstens zwei geradlinige Randabschnitte (10) aufweist, die unter Ausbildung einer Ecke (11) aneinander grenzen,
- mit einer am Filterkörper (8) angebrachten Dichtung (12), die entlang des Rands (9) umlaufend angeordnet ist,
- wobei die Dichtung (12) eine innen an einer dem Filterkörper (8) zugewandten Innenseite der Dichtung (12) umlaufende Innenkontur (13) und eine außen an einer vom Filterkörper (8) abgewandten Außenseite der Dichtung (12) umlaufende Außenkontur (14) aufweist,
- wobei die Innenkontur (13) parallel zu den geradlinigen Randabschnitten (10) bis in die jeweilige Ecke (11) verläuft,
- wobei die Außenkontur (14) parallel zu den geradlinigen Randabschnitten (10) bis zu einem die jeweilige Ecke (11) und Endabschnitte (19) der an die jeweilige Ecke (11) angrenzenden geradlinigen Randabschnitte (10) enthaltenden Eckbereich (16) verläuft und im Eckbereich (16) eine gegenüber den geradlinig verlaufenden Abschnitten (18) der Außenkontur (14) nach außen gewölbte Ausbuchtung (17) bildet,
- wobei die Dichtung (12) im Bereich der Außenkontur (14) eine umlaufende Dichtlippe (24) aufweist.

2. Filterelement nach Anspruch 1,
**dadurch gekennzeichnet,**
**dass** die Außenkontur (14) im jeweiligen Eckbereich (16) einen gekrümmten Verlauf (21) aufweist, der entlang der jeweiligen Ausbuchtung (17) zwei Wendepunkte (22) besitzt.

3. Filterelement nach Anspruch 2,
**dadurch gekennzeichnet,**
**dass** der gekrümmte Verlauf (21) zwischen den beiden Wendepunkten (22) einen Kreisbogenabschnitt aufweist.

4. Filterelement nach Anspruch 2 oder 3,
**dadurch gekennzeichnet,**
**dass** der gekrümmte Verlauf (21) an den Enden (20) des Eckbereichs (17) tangential in die geradlinig verlaufenden Abschnitte (18) der Außenkontur (14) übergeht.

5. Filterelement nach einem der Ansprüche 1 bis 4,
**dadurch gekennzeichnet,**
**dass** die Dichtung (12) einen Verbindungsbereich (23) aufweist, der entlang des Rands (9) umlaufend mit dem Filterkörper (8) dicht verbunden ist.

6. Filterelement nach einem der Ansprüche 1 bis 5,
**dadurch gekennzeichnet,**
**dass** die Dichtung (12) zwischen der Innenkontur (13) und der Außenkontur (14) ein umlaufende Nut (25) aufweist, wobei insbesondere vorgesehen sein kann, dass entlang der Nut (25) einzelne Stege (39) vorgesehen sind, die sich quer zur Nut (25) erstrecken und Seitenwände der Nut (25) aneinander abstützen.

7. Filterelement nach einem der Ansprüche 1 bis 5,
**dadurch gekennzeichnet,**
**dass** die Dichtung (12) an einer Seite zwischen der Innenkontur (13) und der Außenkontur (14) zumindest eine einseitig offene Vertiefung (40) aufweist.

8. Filterelement nach einem der Ansprüche 1 bis 7,
**dadurch gekennzeichnet,**
**dass** die Dichtung (12) an den Filterkörper (8) angeschäumt ist, wobei insbesondere vorgesehen sein kann, dass die Dichtung (12) aus Polyurethan hergestellt ist.

9. Filtergehäuse für eine Filtereinrichtung (1), insbesondere für eine Luftfiltereinrichtung, vorzugsweise eines Kraftfahrzeugs,
- mit zwei Gehäuseschalen (3, 4), die in einem Flanschbereich (5) aneinander befestigbar sind und dabei einen Innenraum (6) zur Aufnahme eines Filterelements (7) nach einem der Ansprüche 1 bis 8 umschließen,
- wobei die erste Gehäuseschale (3) im Flanschbereich (5) eine Innenrippe (26) aufweist, die sich umlaufend komplementär zur Innenkontur (13) der Dichtung (12) des Filterelements (7) erstreckt,
- wobei die erste Gehäuseschale (3) im Flanschbereich (5) eine Außenrippe (27) aufweist, die sich umlaufend komplementär zur Außenkontur (14) der Dichtung (12) des Filterelements (7) erstreckt.

10. Filtergehäuse nach Anspruch 9,
**dadurch gekennzeichnet,**
**dass** die erste Gehäuseschale (3) im Flanschbereich (5) eine Zusatzrippe (30) aufweist, die sich außerhalb der Außenrippe (27) bis in den jeweiligen Eckbereich (16) hinein parallel zu den geradlinigen Randabschnitten (10) erstreckt, wobei insbesondere vorgesehen sein kann, dass die Zusatzrippe (30) einen gekrümmten Abschnitt (33) aufweist, der die beiden geradlinig verlaufenden Abschnitte (31) miteinander verbindet.

11. Filtergehäuse nach Anspruch 9 oder 10,
**dadurch gekennzeichnet,**
**dass** die zweite Gehäuseschale (4) im Flanschbereich (5) eine umlaufende Schulter (35) zum Auflegen der Dichtung (12) aufweist.

12. Filtergehäuse nach einem der Ansprüche 9 bis 11,
**dadurch gekennzeichnet,**
**dass** die zweite Gehäuseschale (4) im Flanschbereich (5) an einer der ersten Gehäuseschale (3) abgewandten Seite einen Kragen (36) aufweist, der außerhalb der Außenrippe (27) verläuft und insbesondere im jeweiligen Eckbereich (16) unterbrochen sein kann.

13. Filtergehäuse nach einem der Ansprüche 9 bis 12,
**dadurch gekennzeichnet,**
**dass** die zweite Gehäuseschale (4) im Flanschbereich (5) an einer von der ersten Gehäuseschale (3) abgewandten Seite einen umlaufenden Versteifungskragen (38) aufweist.

14. Filtereinrichtung, insbesondere Luftfiltereinrichtung, vorzugsweise eines Kraftfahrzeugs, mit einem Filterelement (7) nach einem der Ansprüche 1 bis 8 und mit einem Filtergehäuse (2) nach einem der Ansprüche 9 bis 13, in dem das Filterelement (7) angeordnet ist.

## Claims

1. A plate filter element for a filter device (1), in particular for an air filter device, preferably of a motor vehicle,
- having a filter body (8), which has a peripheral edge (9), which has at least two rectilinear edge sections (10), which border each other, forming a corner (11),
- having a seal (12), which is attached to the filter body (8) and is arranged peripherally along the edge (9),
- wherein the seal (12) has on an inner side facing the filter body (8) an inner contour (13) running around the inside and on an outer side turned away from the filter body (8) an outer contour (14) running around the outside,
- wherein the inner contour (13) runs parallel to the rectilinear edge sections (10) into the respective corner (11),
- wherein the outer contour (14) runs parallel to the rectilinear edge sections (10) to a corner region (16), which contains the respective corner (11) and end sections (19) of the rectilinear edge sections (10) bordering the respective corner (11), and forms a bulge (17), which curves outwards in relation to the rectilinear sections (18) of the outer contour (14), in the corner region (16),
- wherein the seal (12) has a peripheral sealing lip (24) in the region of the outer contour (14).

2. The filter element according to Claim 1, **characterised in that** the outer contour (14) in the respective corner region (16) has a curved profile (21), which has two turning points (22) along the respective bulge (17).

3. The filter element according to Claim 2, **characterised in that** the curved profile (21) has an arc section between the two turning points (22).

4. The filter element according to Claim 2 or 3, **characterised in that** the curved profile (21) merges tangentially into the rectilinear sections (18) of the outer contour (14) at the ends (20) of the corner region (17).

5. The filter element according to one of Claims 1 to 4, **characterised in that** the seal (12) has a connecting region (23), which is connected in a leakproof manner to the filter body (8) peripherally along the edge (9).

6. The filter element according to one of Claims 1 to 5, **characterised in that** the seal (12) has a peripheral groove (25) between the inner contour (13) and the outer contour (14), wherein it can be provided in particular for individual webs (39) to be provided along the groove (25), which webs extend transversely to the groove (25) and support side walls of the groove (25) against each other.

7. The filter element according to one of Claims 1 to 5, **characterised in that** the seal (12) has at least one depression (40) which is open on one side on a side between the inner contour (13) and the outer contour (14).

8. The filter element according to one of Claims 1 to 7, **characterised in that** the seal (12) is foamed onto the filter body (8), wherein it can in particular be provided for the seal (12) to be produced from polyurethane.

9. A filter housing for a filter device (1), in particular for an air filter device, preferably of a motor vehicle,
- having two housing shells (3, 4), which can be fastened to each other in a flange region (5) and thus enclose an inner space (6) for accommodating a filter element (7) according to one of Claims 1 to 8,
- wherein the first housing shell (3) has an inner rib (26) in the flange region (5), which rib extends peripherally in a complementary manner to the inner contour (13) of the seal (12) of the filter element (7),
- wherein the first housing shell (3) has an outer rib (27) in the flange region (5), which rib extends peripherally in a complementary manner to the outer contour (14) of the seal (12) of the filter element (7).

10. The filter housing according to Claim 9, **characterised in that** the first housing shell (3) has an additional rib (30) in the flange region (5), which additional rib extends outside the outer rib (27) into the respective corner region (16) parallel to the rectilinear edge sections (10), wherein it can in particular be provided for the additional rib (30) to have a curved section (33) which connects the two rectilinear sections (31) to each other.

11. The filter housing according to Claim 9 or 10, **characterised in that** the second housing shell (4) has a peripheral shoulder (35), onto which the seal (12) is placed, in the flange region (5).

12. The filter housing according to one of Claims 9 to 11, **characterised in that** the second housing shell (4) has a collar (36) in the flange region (5) on a side facing away from the first housing shell (3), which collar runs outside the outer rib (27) and can in particular be interrupted in the respective corner region (16).

13. The filter housing according to one of Claims 9 to 12, **characterised in that** the second housing shell (4) has a peripheral reinforcement collar (38) in the flange region (5) on a side facing away from the first housing shell (3).

14. A filter device, in particular an air filter device, preferably of a motor vehicle, having a filter element (7) according to one of Claims 1 to 8 and having a filter housing (2) according to one of Claims 9 to 13, in which the filter element (7) is arranged.

## Revendications

1. Elément filtrant en plaque pour un dispositif de filtration (1), en particulier pour un dispositif de filtration d'air, de préférence d'un véhicule automobile, comprenant
- un corps de filtre (8) qui présente un bord périphérique (9) lequel présente au moins deux sections de paroi (10) rectilignes qui sont contiguës l'une à l'autre en formant un coin (11),
- un joint d'étanchéité (12) qui est monté sur ledit corps de filtre (8) et est disposé tout autour le long du bord (9),
- ledit joint d'étanchéité présentant à un côté intérieur qui fait face au corps de filtre (8) un contour intérieur (13) s'étendant tout autour à l'intérieur et à un côté extérieur opposé au corps de filtre (8) un contour extérieur (14) s'étendant tout autour à l'extérieur,
- ledit contour intérieur (13) s'étendant parallèlement aux sections de bord (10) rectilignes jusque dans le coin (11) respectif,
- ledit contour extérieur (14) s'étendant parallèlement aux sections de bord (10) rectilignes jusqu'à une zone de coin (16) contenant le coin (11) respectif et les sections d'extrémité (19) des sections de bord (10) rectilignes contiguës au coin (11) respectif, et formant, dans la zone de coin (16), un bombement (17) bombé vers l'extérieur par rapport aux sections (18) s'étendant de façon rectiligne du contour extérieur (14),
- ledit joint d'étanchéité (12) présente une lèvre d'étanchéité (24) périphérique au niveau du contour extérieur (14).

2. Elément filtrant selon la revendication 1, **caractérisé par le fait que** le contour extérieur (14) présente, dans la zone de coin (16) respective, un tracé courbé (21) qui présente deux points d'inflexion (22) le long du bombement (17) respectif.

3. Elément filtrant selon la revendication 2, **caractérisé par le fait que**, entre les deux points d'inflexion (22), le tracé courbé (21) présente une section en arc de cercle.

4. Elément filtrant selon la revendication 2 ou 3, **caractérisé par le fait que**, aux extrémités (20) de la zone de coin (17), le tracé courbé (21) débouche tangentiellement dans lesdites sections (18) s'étendant de façon rectiligne du contour extérieur (14).

5. Elément filtrant selon l'une quelconque des revendications 1 à 4, **caractérisé par le fait que** ledit joint d'étanchéité (12) présente une zone de jonction (23) qui est reliée au corps de filtre (8) d'une manière étanche tout autour le long du bord (9).

6. Elément filtrant selon l'une quelconque des revendications 1 à 5, **caractérisé par le fait que** ledit joint d'étanchéité (12) présente une rainure (25) périphérique entre le contour intérieur (13) et le contour extérieur (14), dans lequel il peut être prévu en particulier que des entretoises (39) individuelles sont prévues le long de ladite rainure (25) qui s'étendent transversalement à la rainure (25) et appuient l'une sur l'autre des parois latérales de la rainure (25).

7. Elément filtrant selon l'une quelconque des revendications 1 à 5, **caractérisé par le fait que** ledit joint d'étanchéité (12) présente sur un côté, entre le contour intérieur (13) et le contour extérieur (14), au moins une cavité (40) ouverte d'un côté.

8. Elément filtrant selon l'une quelconque des revendications 1 à 7, **caractérisé par le fait que** ledit joint d'étanchéité (12) est réalisé par moussage sur le corps de filtre (8), dans lequel il peut être prévu en particulier que le joint d'étanchéité (12) est réalisé en polyuréthane.

9. Boîtier de filtre pour un dispositif de filtration (1), en particulier pour un dispositif de filtration d'air, de préférence d'un véhicule automobile, comprenant
- deux coques de boîtier (3, 4) qui peuvent être fixées l'une sur l'autre dans une zone de bride (5) tout en entourant un espace intérieur (6) de réception d'un élément filtrant (7) selon l'une quelconque des revendications 1 à 8,
- la première coque de boîtier (3) présentant, dans la zone de bride (5), une nervure intérieure (26) qui s'étend tout autour de manière complémentaire au contour intérieur (13) du joint d'étanchéité (12) de l'élément filtrant (7),
- la première coque de boîtier (3) présentant, dans la zone de bride (5), une nervure extérieure (27) qui s'étend tout autour de manière complémentaire au contour extérieur (14) du joint d'étanchéité (12) de l'élément filtrant (7).

10. Boîtier de filtre selon la revendication 9, **caractérisé par le fait que** ladite première coque de boîtier (3) présente, dans la zone de bride (5), une nervure supplémentaire (30) qui s'étend à l'extérieur de la nervure extérieure (27) jusque dans la zone de coin (16) respective, parallèlement aux sections de bord (10) rectilignes, dans lequel il peut être prévu en particulier que ladite nervure supplémentaire (30) présente une section courbée (33) qui relie entre elles les deux sections (31) s'étendant de façon rectiligne.

11. Boîtier de filtre selon la revendication 9 ou 10, **caractérisé par le fait que** la deuxième coque de boîtier (4) présente, dans la zone de bride (5), un épaulement (35) périphérique d'appui du joint d'étanchéité (12).

12. Boîtier de filtre selon l'une quelconque des revendications 9 à 11, **caractérisé par le fait que** ladite deuxième coque de boîtier (4) présente, dans la zone de bride (5), sur une face montrant dans la direction opposée à la première coque de boîtier (3), une collerette (36) qui s'étend à l'extérieur de la nervure extérieure (27) et peut être interrompue en particulier dans la zone de coin (16) respective.

13. Boîtier de filtre selon l'une quelconque des revendications 9 à 12, **caractérisé par le fait que** ladite deuxième coque de boîtier (4) présente, dans la zone de bride (5), sur une face montrant dans la direction opposée à la première coque de boîtier (3), une collerette raidisseuse (38) périphérique.

14. Dispositif de filtration, en particulier dispositif de filtration d'air, de préférence d'un véhicule automobile, comprenant un élément filtrant (7) selon l'une quelconque des revendications 1 à 8 ainsi qu'un boîtier de filtre (2) selon l'une quelconque des revendications 9 à 13, à l'intérieur duquel ledit élément filtrant (7) est disposé.
